(19) Europäisches Patentamt
European Patent Office
Office européen des brevets

(11) **EP 2 785 124 B1**

## (12) EUROPEAN PATENT SPECIFICATION

(45) Date of publication and mention
of the grant of the patent:
**19.06.2019   Bulletin 2019/25**

(51) Int Cl.:
**H04W 64/00** (2009.01)       **G01S 5/02** (2010.01)

(21) Application number: **13161433.1**

(22) Date of filing: **27.03.2013**

(54) **Method for determining, by at least a cooperating node of a group of cooperating nodes, a position of a target node.**

Verfahren zur Bestimmung, durch mindestens einen Kooperationsknoten aus einer Gruppe von Kooperationsknoten, der Position eines Zielknotens

Procédé permettant de déterminer, par au moins un noeud de coopération d'un groupe de noeuds coopérants, une position d'un noeud cible

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**01.10.2014   Bulletin 2014/40**

(73) Proprietors:
• **Mitsubishi Electric R&D Centre Europe B.V.**
**1119 NS  Schiphol Rijk (NL)**
Designated Contracting States:
**FR**
• **Mitsubishi Electric Corporation**
**Chiyoda-ku**
**Tokyo 100-8310 (JP)**
Designated Contracting States:
**AL AT BE BG CH CY CZ DE DK EE ES FI GB GR HR HU IE IS IT LI LT LU LV MC MK MT NL NO PL PT RO RS SE SI SK SM TR**

(72) Inventors:
• **Gresset, Nicolas**
**35708 RENNES Cedex 7 (FR)**

• **Noureddine, Hadi**
**35708 RENNES Cedex 7 (FR)**

(74) Representative: **Cabinet Le Guen Maillet**
**3, impasse de la Vigie**
**CS 71840**
**35418 Saint-Malo Cedex (FR)**

(56) References cited:
**FR-A1- 2 965 060       US-B2- 8 259 699**

• **J. O. SMITH; J. S. ABEL: "Closed-form least-squares source location estimation from range-difference measurements", IEEE TRANS. ACOUST., SPEECH, SIGNAL PROCESSING, December 1987 (1987-12), XP007914836,**
• **R. OLFATI-SABER; R. MURRAY: "Consensus problems in networks of agents with switching topology and time-delays", AUTOMATIC CONTROL, IEEE TRANSACTIONS ON, vol. 49, no. 9, September 2004 (2004-09), pages 1520-1533, XP11118659,**

**Description**

The present invention relates generally to a method and a device for determining, by a cooperating node of a group of cooperating nodes, a position of a target node.

The classical geolocalization methods use reference transmitters which broadcast a signal that allows a device to compute its geolocalization. The relative or absolute position of the device can be deduced from the signals transmitted by said reference transmitters. In this case, the reference transmitters are said to be passive since they do not have any computation means.

Relative geolocalization is useful in many different applications like localization of goods or apparatus in a factory, localization of cars within an area such as an highway, or car collision avoidance.

The device to be localized may be a moving device or a stationary device. The US patent 8259699 discloses a method and system for target positioning and tracking in cooperative relay networks.

The patent application FR2 965 060 discloses a method and device for cooperative localization method of a target comprised in a mobile body.

SUMMARY OF INVENTION

The invention is disclosed in the claims. The present invention aims at providing a method and a device which enable to determine the geolocalization of a device.

To that end, the present invention concerns a method for determining, by a cooperating node of a group of cooperating nodes, a position of a target node, characterized in that the method comprises the steps, executed by the cooperating node of:

- determining the position of other cooperating nodes,
- determining the position of a common reference position for the cooperating nodes,
- obtaining information related to measurements on wireless signals exchanged between the target node and the cooperating nodes,
- determining, from the obtained information, an information representative of the distance between the target node and said common reference position or representative of the direction of the target node relative to the common reference position,
- determining, from information related to measurements and from information representative of the distance between the target node and said common reference position or representative of the direction of the target node relative to the common reference position, the position of the target node.

The present invention also concerns a device for determining, by at least a cooperating node of a group of cooperating nodes, a position of a target node, characterized in that the device comprises:

- means for determining the position of other cooperating nodes,
- means for determining the position of a common reference position for the cooperating nodes,
- means for obtaining information related to measurements on wireless signals exchanged between the target node and the cooperating nodes,
- means for determining, from the obtained information, an information representative of the distance between the target node and said common reference position or representative of the direction of the target node relative to the common reference position,
- means for determining, from information related to measurements and from the information representative of the distance between the target node and said common reference position or representative of the direction of the target node relative to the common reference position, the position of the target node.

Thus, the position of a target node can be obtained.

According to a particular feature, the position of the cooperating nodes are obtained from distances derived from time of arrivals of signals, or are obtained from distances derived from round trip delays or are obtained from geolocalization information transferred by the cooperating nodes.

Thus, the cooperating nodes can be deployed in an ad-hoc fashion and learn the positions of the other cooperating nodes without any planning.

According to a particular feature, the common reference position is the barycenter of the positions of the cooperating nodes.

Thus, the cooperating nodes can be virtually considered as a unique node, which relevantly characterizes the positions of the cooperating nodes.

According to a particular feature, the common reference position is determined using an iterative algorithm, between the cooperating nodes which receive respectively information related to the common reference position from the other cooperating nodes, perform linear operations on the received information related to the common reference position and then transmit the obtained results of linear operations to the other cooperating nodes.

Thus, the common reference position can be computed in a distributed fashion.

According to a particular feature, measurements on wireless signals exchanged between the target node and the cooperating nodes are the time of arrivals of signals, round trip delays or received signals strength.

Thus, the distance between the cooperating nodes can be deduced directly from the measurements.

According to a particular feature, the distance between the common reference position and the target node is the average value of all distances between the cooperating nodes and the target node or the average of the lower and upper bounds of all distances between the cooperating nodes and the target node or the upper bound of all distances between the cooperating nodes and the target node.

Thus, the distance between the common reference position and the target node is easily computed and can be computed in a distributed fashion.

According to a particular feature, the position of the target node $\hat{X}_R$ is determined using the determined distance $d_{R0}$ between the common reference position and the target node, and using the following formula :

$$\hat{X}_R = (\mathbf{A}^T \mathbf{A} + \lambda \mathbf{I}_2)^{-1} \mathbf{A}^T \mathbf{b} + X_0$$

where $\mathbf{I}_2$ is the 2x2 identity matrix, $X_0$ is the position of the common reference position, and

$$\mathbf{A} = -2 \begin{bmatrix} x_1 - x_0 & y_1 - x_0 \\ \vdots & \vdots \\ x_N - x_0 & y_N - x_0 \end{bmatrix} \quad ; \quad \mathbf{b} = \begin{bmatrix} d_{R1}^2 - d_{R0}^2 - d_{10}^2 \\ \vdots \\ d_{RN}^2 - d_{R0}^2 - d_{N0}^2 \end{bmatrix}$$

$\lambda$ is the root of a polynomial of degree 4, $x_i\, y_i$ with i=1 to $N$ is the coordinates of the $i$-th cooperating node, $d_{Ri}$ is the distance between the i-th cooperating node, $d_{R0}$ is the distance between the common reference position and the target node, $d_{i0}$ is the distance between the $i$-th cooperating node, and the common reference position, the polynomial being expressed as

$$v_1^2 (d_2 + \lambda)^2 + v_2^2 (d_1 + \lambda)^2 - d_{R0}^2 (d_1 + \lambda)^2 (d_2 + \lambda)^2 = 0$$

$$\mathbf{A}^T \mathbf{A} = \mathbf{U} \begin{bmatrix} d_1 & 0 \\ 0 & d_2 \end{bmatrix} \mathbf{U}^T \qquad \begin{bmatrix} v_1 \\ v_2 \end{bmatrix} = \mathbf{U}^T \mathbf{A}^T \mathbf{b} \; .$$

where $\qquad\qquad\qquad\qquad$ is a singular value decomposition of $\mathbf{A}^T\mathbf{A}$, and

Thus, the position of the target node is computed with a low complexity.

According to a particular feature, the position of the target node is determined by determining a first estimate $\hat{X}_{LS}$ of the position of the target node :

$$\hat{X}_{LS} = \mathbf{P}(\mathbf{A}^T \mathbf{A})^{-1} \mathbf{A}^T \mathbf{b}$$

$$A = \begin{bmatrix} -2x_1 & -2y_1 & 1 \\ \vdots & \vdots & \vdots \\ -2x_N & -2y_N & 1 \end{bmatrix}$$

where

$$b = \begin{bmatrix} d_{R1}^2 - (x_1^2 + y_1^2) \\ \vdots \\ d_{RN}^2 - (x_N^2 + y_N^2) \end{bmatrix}$$

$$P = \begin{bmatrix} 1 & 0 & 0 \\ 0 & 1 & 0 \end{bmatrix}$$

and by refining the position of the target note according to:

$$\hat{X}_R = \frac{d_{R0}}{\left\| \hat{X}_{LS} - X_0 \right\|} (\hat{X}_{LS} - X_0) + X_0$$

where $X_0$ is the position of the common reference position, $d_{R0}$ is the distance between the common reference position and the target node.

Thus, the precision of estimation of the position of the target node is improved.

According to a particular feature, the cooperating nodes are synchronized and each cooperating node measures the reception time of messages broadcasted by the target node in order to determine a distance $m_i$ with the target node $m_i = d_{Ri} + \beta$ where $\beta$ is a bias common to the cooperating nodes, i is the indicia of the cooperating node, and the position of the target node is determined by :

- determining a first estimate $\hat{X}_{SI}$ of the position of the target node,

$$\hat{X}_{SI} = \mathbf{P}(\mathbf{A}^T\mathbf{A})^{-1}\mathbf{A}^T\mathbf{b} + X_0$$

$$\mathbf{A} = -2 \begin{bmatrix} x_2 - x_1 & y_2 - y_1 & m_1 - m_2 \\ \vdots & \vdots & \vdots \\ x_N - x_1 & y_N - y_1 & m_1 - m_N \end{bmatrix} \; ; \qquad \mathbf{b} = \begin{bmatrix} m_2^2 - m_1^2 - d_{20}^2 + d_{10}^2 \\ \vdots \\ m_N^2 - m_1^2 - d_{N0}^2 + d_{10}^2 \end{bmatrix} ;$$

$$\mathbf{P} = \begin{bmatrix} 1 & 0 & 0 \\ 0 & 1 & 0 \end{bmatrix}$$

the direction of the target node relative to the common reference corresponding to the argument of a vector $\alpha = X_R - X_0$, $X_0$ is the position of the common reference position and $\hat{X}_R$ of the position of the target node,
- optimizing

$$\left[ \hat{\beta}, \hat{R} \right] = \arg\min_{\beta, R} \sum_i (m_i^2 - d_{i0}^2 - 2m_i\beta + \beta^2 - R^2 + 2(x_i - x_0)\cos(\alpha)R + 2(y_i - y_0)\sin(\alpha)R)^2$$

- determining the position $\hat{X}_R$ of the target node according to

$$\hat{X}_R = \begin{bmatrix} \hat{R}\cos\alpha + x_0 \\ \hat{R}\sin\alpha + y_0 \end{bmatrix} .$$

Thus, it is possible to determine the position of the target node with a time difference of arrival approach, and in particular to build the system where the target node only transmits a reference signal and performs no computation or exchange of message with the cooperating nodes.

According to still another aspect, the present invention concerns computer programs which can be directly loadable into a programmable device, comprising instructions or portions of code for implementing the steps of the methods according to the invention, when said computer programs are executed on a programmable device.

Since the features and advantages relating to the computer programs are the same as those set out above related to the methods and apparatus according to the invention, they will not be repeated here.

The characteristics of the invention will emerge more clearly from a reading of the following description of an example embodiment, the said description being produced with reference to the accompanying drawings, among which :

Fig. 1 represents a system composed of plural cooperating nodes which cooperate in order to determine the geo localization of a target node according to the present invention;

Fig. 2 is a diagram representing the architecture of a cooperating node in which the present invention is implemented;

Fig. 3 discloses a first example of an algorithm executed by at least one cooperating node of the plurality of cooperating nodes in order to determine the geo localization of a target node according to the present invention;

Fig. 4 discloses a second example of an algorithm executed by at least one cooperating node of the plurality of cooperating nodes in order to determine the geo localization of a target node according to the present invention;

Fig. 5 discloses a third example of an algorithm executed by at least one cooperating node of the plurality of cooperating nodes in order to determine the geo localization of a target node according to the present invention;

Fig. 6 discloses the different distances which are determined in order to determine the geo localization of a target node according to the present invention.

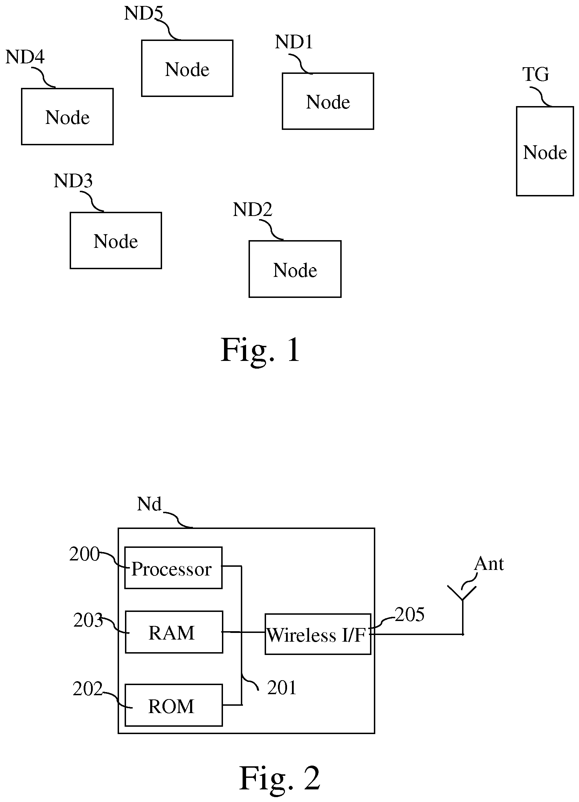

**Fig. 1** represents a system composed of plural cooperating nodes which cooperate in order to determine the geo localization of a target node according to the present invention.

In the Fig. 1, five nodes noted ND1 to ND5 are cooperating nodes which cooperate in order to determine the geo localization of a target node TG.

The target node TG may be, for example, a car and the cooperating nodes ND1 to ND5 are nodes of an infrastructure in a city which controls the geo localization of the target node TG in order to avoid any collision with other cars in an intersection of a city.

The target node TG may be, for example, a stationary device installed along of a highway and the cooperating nodes ND1 to ND5 are located in moving cars on the highway.

The target node TG may be a moving device in a factory or in a warehouse and the target node is a good or a robot.

The target node TG comprises wireless telecommunication means for sending and/or receiving signals and/or messages.

Each cooperating node ND1 to ND5 comprises wireless telecommunication means for sending and/or receiving signals and/or messages to the target node TG.

Each cooperating node ND1 to ND5 comprises wireless or wired telecommunication means for sending and/or receiving signals and/or messages to the other cooperating nodes.

The signals or messages sent by the target node TG allow each cooperating node ND of the cooperating set of cooperating nodes to get measurements from which information representative of the distances between the cooperating nodes ND and the target node TG is obtained.

Information representative of the distances between the cooperating nodes ND and the target node TG may be obtained from the measurements of the time of arrival (TOA) of the signals, for example obtained from the round trip delay of messages or signals exchanged between the cooperating nodes ND and the target node TG.

For example, each cooperating node ND transmits a signal which is received by the target node TG. The target node TG waits a given amount of time known by each cooperating node ND before sending back a signal.

Each cooperating node ND measures the round trip delay from the signal received from the target node TG and can estimate the distance between the cooperating node ND and the target node TG.

For example, the target node TG sends a signal which is received by at least one cooperating node ND. The cooperating node ND waits a given amount of time known by the target node ND before sending back a signal.

The target node TG measures the round trip delay from the signal received from the cooperating node ND and estimates the distance between the cooperating node ND and the target node TG. The target node TG transfers the estimated distance as a message to at least one cooperating node ND.

For example, one selected cooperating node ND among the cooperating nodes transmits a signal which is received by the target node TG. The target node TG waits a given amount of time, known at least by the selected cooperating node ND, before broadcasting back a signal to several cooperating nodes ND. Each cooperating node ND measures the round trip delay between the selected cooperating node ND and the target node TG. The selected cooperating node ND estimates the distance with the target node TG from the round trip delay and informs the estimated distance to the other cooperating nodes ND. The other cooperating nodes ND can, in return, estimate their respective distance to the target node ND.

For example, information representative of the distances between the cooperating nodes ND and the target node TG may also be obtained from the measurements of the received signal strength (RSS) of said signal, by using a path loss model which allows the evaluation of the distances between the cooperating nodes ND and the target node TG.

Information representative of the distances between the cooperating nodes ND and the target node TG may in particular be associated to estimated distances between the cooperating nodes ND and the target node TG plus a bias which is the same for all estimated distances between the cooperating nodes ND and the target node TG and obtained from the measurements of the time of arrivals (TOA) of signals when the cooperating nodes ND are synchronized in time and the target node TG is not. For example, the target node TG transmits a signal which is received by the synchronous cooperating nodes ND which compute the time difference of arrival with respect to a common clock, for example provided by one of the cooperating nodes to the others.

Information representative of the distances between the cooperating nodes ND and the target node TG may in particular be associated to differences of distances between the cooperating nodes ND and the target node TG and obtained from the measurements of the time difference of arrivals (TDOA) of signals when the cooperating nodes ND are synchronized in time. For example, the cooperating nodes ND transmit a signal synchronously and the target node TG measures the time difference of arrivals between the signals received from the cooperating nodes ND. A cooperating node ND is selected among the cooperating nodes ND. The selected cooperating node ND is chosen for example randomly or as the cooperating node ND whose signal is received by the target node TG the earliest in time. Messages containing at least one time difference of arrival values are then sent from the target node TG to the selected cooperating node ND or to any or all the cooperating nodes ND.

The wireless signal sent by the cooperating nodes ND is for example a synchronization sequence that is sent synchronously from at least one cooperating node, detected by the target node TG and used as the reference timer.

The wireless signal sent by the target node TG may be a synchronization sequence sent in response to a synchronization sequence received by the target node TG, for example after a predefined time interval. The synchronization sequence may be sent periodically by the target node TG and/or by the cooperating nodes ND.

It has to be noted that several signal transmissions can be held in parallel by the use of cooperating node ND specific sequences with good cross-correlation properties, that allows to separate the time of arrivals of signals transferred by several cooperating nodes ND to the target node TG when concurrent transmissions are performed.

The messages exchanged between the target node TG and the cooperating nodes may comprise information on the position of the cooperating nodes ND.

The messages exchanged between the cooperating nodes ND may comprise information relative to measurements between the cooperating nodes ND and the target node TG or may comprise information relative to the position of the target node TG with respect to the cooperating nodes ND or to a reference position, common to all cooperating nodes ND, or may comprise GPS coordinates of cooperating nodes.

It has to be noted here that in the present invention, the wording position of the target node TG refers to the relative position of the target node TG with respect to the cooperating nodes ND or to a reference position.

The Fig. 1 gives an example with a single target node TG. The present invention is also applicable in case of plural target nodes TG.

The Fig. 1 gives an example with $N = 5$ cooperating nodes ND. The present invention is also applicable if there are three or more cooperating nodes ND.

According to the invention, at least one cooperating node ND:

- determines the position of other cooperating nodes,
- determines the position of a common reference position for the cooperating nodes,
- obtains information related to measurements on wireless signals exchanged between the target node and the cooperating nodes,
- determines, from the obtained information, an information representative of the distance between the target node and said common reference position or representative of the direction of the target node relative to the common reference position,
- determines, from information related to measurements and from the information representative of the distance between the target node and said common reference position or representative of the direction of the target node relative to the common reference position, the position of the target node.

**Fig. 2** is a diagram representing the architecture of a cooperating node in which the present invention is implemented.

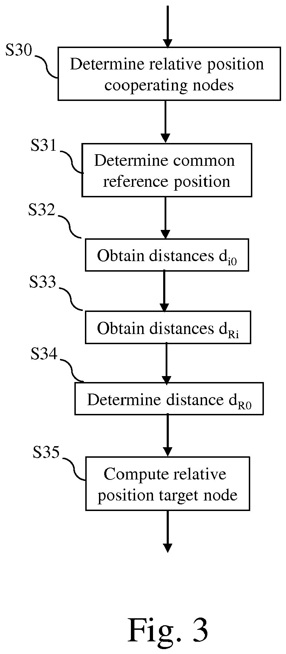

The cooperating node ND has, for example, an architecture based on components connected together by a bus 201 and a processor 200 controlled by the program as disclosed in Fig. 3 or 4 or 5.

It has to be noted here that the cooperating node ND may have an architecture based on dedicated integrated circuits.

The bus 201 links the processor 200 to a read only memory ROM 202, a random access memory RAM 203 and a wireless interface 205 and may comprise a wired interface not shown in Fig. 2.

The memory 203 contains registers intended to receive variables and the instructions of the program related to the algorithm as disclosed in Fig. 3 or 4 or 5.

The processor 200 controls the operation of the wireless interface 205.

The read only memory 202 contains instructions of the program related to the algorithm as disclosed in Fig. 3 or 4 or 5, which are transferred, when the cooperating node ND is powered on, to the random access memory 203.

Any and all steps of the algorithm described hereafter with regard to Fig. 3 or 4 or 5 may be implemented in software by execution of a set of instructions or program by a programmable computing machine, such as a PC (*Personal Computer*), a DSP (*Digital Signal Processor*) or a microcontroller; or else implemented in hardware by a machine or a dedicated component, such as an FPGA (*Field-Programmable Gate Array*) or an ASIC (*Application-Specific Integrated Circuit*).

In other words, the cooperating node ND includes circuitry, or a device including circuitry, causing the cooperating node ND to perform the steps of the algorithm described hereafter with regard to Fig. 3 or 4 or 5.

Such a device including circuitry causing the cooperating node ND to perform the steps of the algorithm described hereafter with regard to Fig. 3 or 4 or 5 may be an external device connectable to the cooperating node ND.

**Fig. 3** discloses a first example of an algorithm executed by at least one cooperating node of the plurality of cooperating nodes in order to determine the geo localization of a target node according to the present invention.

More precisely, the present algorithm is executed by the processor 200 of at least one cooperating node or each cooperating node.

At step S30, the processor 200 obtains the position of the cooperating nodes ND.

It has to be noted here that in the present invention, the wording position of a cooperating node ND refers to the relative position of the cooperating node ND in the defined coordinate basis.

A relative position is a position in connection with a reference point. Coordinates of the relative position may be defined in a coordinate basis with respect to at least two other points that may be taken randomly in the $N$ cooperating nodes set. $N$ cooperating nodes can define a $N$-1-dimensional basis.

The position of the cooperating nodes ND is for example obtained from the estimated distances between the cooperating nodes. The estimated distances between the cooperating nodes may for example be obtained by using the time of arrival of signals, measured with respect to a common clock reference when the cooperating nodes ND are synchronous in time, and transferred by each cooperating node ND to each other cooperating node ND. It has to be noted that the estimated distances may comprise an estimation error.

The estimated distances between the cooperating nodes ND may for example be obtained by using the time of arrival of signals by using a round trip delay measure obtained by an exchange of messages or signals.

The estimated distances between the cooperating nodes ND may for example be obtained from geolocalization information like GPS of the cooperating nodes.

From the estimated distances derived from the times of arrival, the processor 200 determines the position $X_i$ = $(x_i, y_i)$ of each cooperating node ND.

In a variant of realization, instead of using the time of arrival of signals or messages, estimated distances are determined from the received signal strength.

At next step S31, the processor 200 determines a position of a common reference point ND0 to the cooperating nodes ND. The position of the common reference point ND0 denoted $X_0 = (x_0, y_0)$ is preferably the barycenter of the positions of the cooperating nodes ND.

It has to be noted here that in the present invention, the wording position of the common reference point ND0 refers to the relative position of the reference point ND0 in the defined coordinate basis.

The position of the common reference point may be computed in a centralized fashion, i.e. by a single cooperating node ND from the estimated positions of the cooperating nodes ND determined by said cooperating node ND according to the following formula:

$$x_0 = \sum_i x_i / N \text{ and } y_0 = \sum_i y_i / N$$

The position of the common reference point may be computed in a distributed way. For example, each cooperating node ND, using a consensus-based averaging algorithm, receives information from the other cooperating nodes, performs linear operations on the received information, and then transmits the obtained results to the other cooperating nodes ND.

An example of consensus-based method is given in the paper of R. Olfati-Saber and R. Murray entitled "Consensus problems in networks of agents with switching topology and time-delays" and published in Automatic Control, IEEE Transactions on, 49(9): 1520-1533, Sept. 2004.

After several iterations, the computations at every cooperating node ND converge to an approximation of the average value of the information exchanged by the cooperating nodes ND. When the information is the position of each cooperating node ND, the average value corresponds to the barycenter coordinates.

At next step S32, the processor 200 obtains estimates of the distances between the cooperating nodes ND and the common reference position $X_0$. The estimate of the distance between the cooperating node NDi and the reference position is denoted by $d_{i0}$, and computed as follows:

$$d_{i0} = \sqrt{(x_i - x_0)^2 + (y_i - y_0)^2}$$

A next step S33, the processor 200 obtains estimates of the distances between the cooperating nodes ND and the target node TG. The estimate of the distance between the cooperating node NDi and the target node TG is noted $d_{Ri}$. The estimate of the distances $d_{Ri}$ may be obtained from the measurement of the time of arrival (TOA) of the signals. Estimates of the distances $d_{Ri}$ are for example determined by each cooperating node ND and provided to at least one or all other cooperating nodes ND, or the measurements are provided to at least one or all other cooperating nodes that determine the distances $d_{Ri}$. For example, distances or measurements are provided to the selected cooperating node ND.

For example, each cooperating node ND transmits a signal which is received by the target node TG. The target node TG waits a given amount of time known by each cooperating node ND before sending back a signal.

Each cooperating node ND measures the round trip delay from the signal received from the target node TG and can estimate the distance between the cooperating node ND and the target node TG.

For example, the target node TG sends a signal which is received by at least one cooperating node ND. The cooperating node ND waits a given amount of time known by the target node ND before sending back a signal.

The target node TG measures the round trip delay from the signal received from the cooperating node ND and estimates the distance between the cooperating node ND and the target node TG. The target node TG transfers the estimated distance as a message to at least one cooperating node ND.

For example, one selected cooperating node ND among the cooperating nodes transmits a signal which is received by the target node TG. The target node TG waits a given amount of time, known at least by the selected cooperating node ND, before broadcasting back a signal to several cooperating nodes ND. Each cooperating node ND measures the round trip delay between the selected cooperating node ND and the target node TG. The selected cooperating node ND estimates the distance with the target node TG from the round trip delay and informs the estimated distance to the other cooperating nodes ND. The other cooperating nodes ND can, in return, estimate their respective distance to the target node ND. It has to be noted that several signal transmissions can be held in parallel by the use of cooperating node ND specific sequences with good cross-correlation properties, that allows to separate the time of arrivals of signals transferred by several cooperating nodes ND to the target node TG when concurrent transmissions are performed.

For example, information representative of the distances between the cooperating nodes ND may also be obtained from the measurements of the received signal strength (RSS) of said signal, by using a path loss model which allows the evaluation of the distances between the cooperating nodes ND and the target node TG.

At next step S34, the processor 200 determines an estimate of the distance between the common reference position $X_0$ and the target node TG.

The distance between the common reference position $X_0$ and the target node TG is noted $d_{R0}$.

For example, the processor 200 determines the estimate of the distance between the common reference position $X_0$ and the target node TG as the average value of all obtained distances

$$d_{R0\_mean} = mean(d_{Ri})$$

For example, the processor 200 determines the estimate of the distance between the common reference position $X_0$ and the target node TG as the average of the lower and upper bounds all obtained distances

$$d_{R0\_max/min} = \left( \max_i (|d_{Ri} - d_{i0}|) + \min_i (d_{Ri} + d_{i0}) \right) / 2 \,.$$

For example, the processor 200 determines the estimates of the distance between the common reference position $X_0$ and the target node TG as the upper bound on the obtained distances

$$d_{R0\_\max} = \max_i(|\, d_{Ri} - d_{i0}\,|).$$

As a remark, the three values above can be computed in a distributed fashion, for example by using modified consensus algorithms.

At next step S35, the processor 200 determines an estimate $\hat{X}_R$ of the position of the target note TG.

For example, the processor 200 takes into account the constraint on the knowledge of $d_{R0}$ as a result of the previous operation: $\left\| X_R - X_0 \right\|^2 - d_{R0}^2 = 0$

Which leads to

$$\hat{X}_R = (\mathbf{A}^T\mathbf{A} + \lambda \mathbf{I}_2)^{-1}\mathbf{A}^T\mathbf{b} + X_0$$

where $\mathbf{I}_2$ is the 2x2 identity matrix, and

$$\mathbf{A} = -2\begin{bmatrix} x_1 - x_0 & y_1 - x_0 \\ \vdots & \vdots \\ x_N - x_0 & y_N - x_0 \end{bmatrix} \quad ; \quad \mathbf{b} = \begin{bmatrix} d_{R1}^2 - d_{R0}^2 - d_{10}^2 \\ \vdots \\ d_{RN}^2 - d_{R0}^2 - d_{N0}^2 \end{bmatrix}.$$

and $\lambda$ is the root of a polynomial of degree 4.

This polynomial can be expressed as

$$v_1^2(d_2 + \lambda)^2 + v_2^2(d_1 + \lambda)^2 - d_{R0}^2(d_1 + \lambda)^2(d_2 + \lambda)^2 = 0$$

where $\mathbf{A}^T\mathbf{A} = \mathbf{U}\begin{bmatrix} d_1 & 0 \\ 0 & d_2 \end{bmatrix}\mathbf{U}^T$ is a singular value decomposition of $\mathbf{A}^T\mathbf{A}$, and $\begin{bmatrix} v_1 \\ v_2 \end{bmatrix} = \mathbf{U}^T\mathbf{A}^T\mathbf{b}$.

In general, the roots of a polynomial can be expressed analytically up to order 4. Thus, by applying a first estimation of $d_{R0}$, the implementation of the algorithm is made easier.

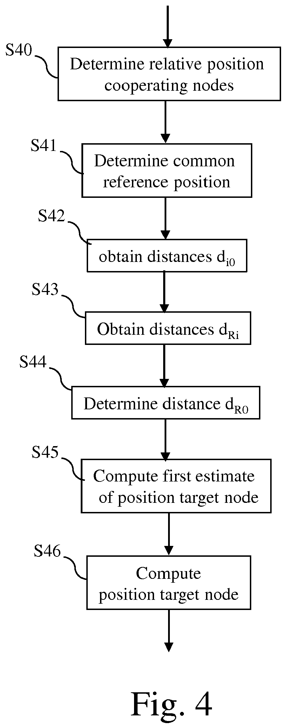

**Fig. 4** discloses a second example of an algorithm executed by at least one node of the plurality of cooperating nodes in order to determine the geo localization of a node according to the present invention.

More precisely, the present algorithm is executed by the processor 200 of at least one cooperating node or each cooperating node.

At step S40, the processor 200 obtains the position of the cooperating nodes.

It has to be noted here that in the present invention, the wording position of a cooperating node ND refers to the relative position of the cooperating node ND in the defined coordinate basis.

The position of the cooperating nodes ND is for example obtained from the estimated distances between the cooperating nodes. The estimated distances between the cooperating nodes may for example be obtained by using the time of arrival of signals, measured with respect to a common reference clock when the nodes ND are synchronous in time, and transferred by each cooperating node ND to each other cooperating node ND.

The estimated distances between the cooperating nodes ND may for example be obtained by using the time of arrival of signals by using a round trip delay measure obtained by an exchange of messages or signals. The distances between the cooperating nodes may for example be obtained from geolocalization information like GPS of the cooperating nodes.

From the estimated distances derived from the times of arrival, the processor 200 determines the position $X_i = (x_i, y_i)$ of each cooperating node ND.

In a variant of realization, instead of using the time of arrival of signals or messages, estimated distances are determined from the received signal strength.

At next step S41, the processor 200 determines a position of a common reference point ND0 to the cooperating nodes ND. The position of the common node denoted $X_0 = (x_0, y_0)$ is preferably the barycenter of the positions of the cooperating nodes ND.

It has to be noted here that in the present invention, the wording position of the common reference point ND0 refers to the relative position of the reference point ND0 in the defined coordinate basis.

The position of the common reference point ND0 may be computed in a centralized fashion, i.e. by a single cooperating node Nd from the positions of the cooperating nodes determined by said cooperating node according to the following formula:

$$x_0 = \sum_i x_i / N \ \text{ and } \ y_0 = \sum_i y_i / N$$

The position of the common reference point ND0 may be computed in a distributed way. For example, each cooperating node ND, using a consensus-based averaging algorithm, receives information from the other cooperating nodes, performs linear operations on the received information, and then transmits the obtained results to the other cooperating nodes ND.

At next step S42, the processor 200 computes estimates of the distances between the cooperating nodes ND and the common reference position $X_0$. The estimate of the distance between the cooperating node NDi and the reference position is denoted by $d_{i0}$, and computed as follows:

$$d_{i0} = \sqrt{(x_i - x_0)^2 + (y_i - y_0)^2}$$

A next step S43, the processor 200 obtains estimates of the distances between the cooperating nodes ND and the target node TG. The estimate of the distance between the cooperating node NDi and the target node TG is noted $d_{Ri}$.

The estimate of the distance between the cooperating node NDi and the target node TG is noted $d_{Ri}$ and may be obtained from the measurement of the time of arrival (TOA) of the signals. Estimates of the distances $d_{Ri}$ are for example determined by each cooperating node ND and provided to at least one or all other cooperating nodes ND, or the measurements are provided to at least one or all other cooperating nodes that determine the distances $d_{Ri}$. For example, distances or measurements are provided to the selected cooperating node ND.

For example, each cooperating node ND transmits a signal which is received by the target node TG. The target node TG waits a given amount of time known by each cooperating node ND before sending back a signal.

Each cooperating node ND measures the round trip delay from the signal received from the target node TG and can estimate the distance between the cooperating node ND and the target node TG.

For example, the target node TG sends a signal which is received by at least one cooperating node ND. The cooperating node ND waits a given amount of time known by the target node ND before sending back a signal.

The target node TG measures the round trip delay from the signal received from the cooperating node ND and estimates the distance between the cooperating node ND and the target node TG. The target node TG transfers the estimated distance as a message to at least one cooperating node ND.

For example, one selected cooperating node ND among the cooperating nodes transmits a signal which is received by the target node TG. The target node TG waits a given amount of time, known at least by the selected cooperating node ND, before broadcasting back a signal to several cooperating nodes ND. Each cooperating node ND measures the round trip delay between the selected cooperating node ND and the target node TG. The selected cooperating node ND estimates the distance with the target node TG from the round trip delay and informs the estimated distance to the other cooperating nodes ND. The other cooperating nodes ND can, in return, estimate their respective distance to the target node ND. It has to be noted that several signal transmissions can be held in parallel by the use of cooperating node ND specific sequences with good cross-correlation properties, that allows to separate the time of arrivals of signals transferred by several cooperating nodes ND to the target node TG when concurrent transmissions are performed.

For example, information representative of the distances between the cooperating nodes ND may also be obtained from the measurements of the received signal strength (RSS) of said signal, by using a path loss model which allows the evaluation of the distances between the cooperating nodes ND and the target node TG.

At next step S44, the processor 200 determines an estimate of the distance between the common reference position $X_0$ and the target node TG.

The estimate of the distance between the common reference position and the target node TG is noted $d_{R0}$.

For example, the processor 200 determines the estimate of the distance between the common reference position $X_0$ and the target node TG as the average value of all obtained distances

$$d_{R0\_mean} = mean(d_{Ri})$$

For example, the processor 200 determines the estimate of the distance between the common reference

position $X_0$ and the target node TG as the average of the lower and upper bounds all obtained distances

$$d_{R0\_max/min} = \left( \max_i (|d_{Ri} - d_{i0}|) + \min_j (d_{Ri} + d_{i0}) \right) / 2 \, .$$

For example, the processor 200 determines the estimate of the distance between the common reference position $X_0$ position and the target node TG as the upper bound on the obtained distances

$$d_{R0\_max} = \max_i (|d_{Ri} - d_{i0}|) \, .$$

At next step S45, the processor 200 determines a first estimate $\hat{X}_{LS} = (\hat{x}_{LS}, \hat{y}_{LS})$ of the position of the target node, by using

$$\hat{X}_{LS} = \mathbf{P}(\mathbf{A}^T\mathbf{A})^{-1}\mathbf{A}^T\mathbf{b}$$

where

$$A = \begin{bmatrix} -2x_1 & -2y_1 & 1 \\ \vdots & \vdots & \vdots \\ -2x_N & -2y_N & 1 \end{bmatrix}$$

$$b = \begin{bmatrix} d_{R1}^2 - (x_1^2 + y_1^2) \\ \vdots \\ d_{RN}^2 - (x_N^2 + y_N^2) \end{bmatrix}$$

$$P = \begin{bmatrix} 1 & 0 & 0 \\ 0 & 1 & 0 \end{bmatrix}$$

At next step S46, the processor 200 determines an estimate of the position of the target note TG.

For example, the estimate $\hat{X}_R$ of the position of the target node TG is determined according to:

$$\hat{X}_R = \frac{d_{R0}}{\left\| \hat{X}_{LS} - X_0 \right\|} (\hat{X}_{LS} - X_0) + X_0$$

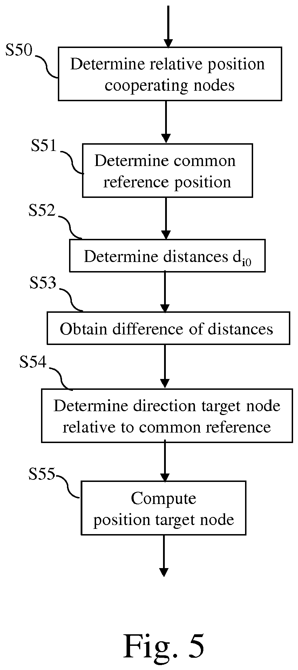

**Fig. 5** discloses a third example of an algorithm executed by at least one node of the plurality of cooperating nodes in order to determine the geo localization of a node according to the present invention.

More precisely, the present algorithm is executed by the processor 200 of at least one cooperating node or each cooperating node.

At step S50, the processor 200 obtains the position of the cooperating nodes.

It has to be noted here that in the present invention, the wording position of a cooperating node ND refers to the relative position of the cooperating node ND in the defined coordinate basis.

The position of the cooperating nodes ND is for example obtained from the estimated distances between the cooperating nodes. The estimated distances between the cooperating nodes may for example be obtained by using the time of arrival of signals, measures with respect to a common clock reference when the nodes ND are synchronous in time, and transferred by each cooperating node ND to each other cooperating node ND.

The estimated distances between the cooperating nodes may for example be obtained by using the time of arrival of signals by using a round trip delay measure obtained by an exchange of messages or signals. The estimated distances between the cooperating nodes may for example be obtained from geolocalization information like GPS of the cooperating nodes.

From the estimate distances derived from the times of arrival, the processor 200 determines the position $X_i = (x_i, y_i)$ of each cooperating node.

In a variant of realization, instead of using the time of arrival of signals or messages, estimated distances are determined from the received signal strength.

At next step S51, the processor 200 determines an estimate of a relative position of a common reference point ND0 to the cooperating nodes ND. The relative position of the common node denoted $X_0 = (x_0, y_0)$ is preferably the barycenter of the positions of the cooperating nodes ND.

It has to be noted here that in the present invention, the wording position of the common reference point ND0 refers to the relative position of the reference point ND0 in the defined coordinate basis.

The position of the common reference point ND0 may be computed in a centralized fashion, i.e. by a single cooperating node Nd from the relative positions of the cooperating nodes obtained by said cooperating node according to the following formula:

$$x_0 = \sum_i x_i / N \text{ and } y_0 = \sum_i y_i / N$$

The position of the common reference point ND0 may be computed in a distributed way. For example, each cooperating node ND, using a consensus-based averaging algorithm, receives information from the other cooperating nodes, performs linear operations on the received information, and then transmits the obtained results to the other cooperating nodes ND.

An example of consensus-based method is given in the paper of R. Olfati-Saber and R. Murray entitled "Consensus problems in networks of agents with switching topology and time-delays" and published in Automatic Control, IEEE Transactions on, 49(9): 1520-1533, Sept. 2004.

After several iterations, the computations at every cooperating node converge to an approximation of the average value of the information exchanged by the cooperating nodes. When the information is the position of each cooperating node, the average value corresponds to the barycenter coordinates.

At next step S52, the processor 200 determines an estimated of the distances between the cooperating nodes ND and the common reference position. The estimate of the distance between the cooperating node NDi and the reference position is denoted by $d_{i0}$.

At next step S53, the processor 200 obtains information representative of difference of distances between the cooperating nodes ND and the target node TG. The estimate of the distance between the cooperating node NDi and the target node TG is noted $d_{Ri}$.

For example, the cooperating nodes ND transmit a signal synchronously and the target node TG measures the time difference of arrivals between the signals received from the cooperating nodes ND. A cooperating node ND is selected among the cooperating nodes ND. The selected cooperating node ND is chosen for example randomly or as the cooperating node ND whose signal is received by the target node TG the earliest in time. Messages containing at least one time difference of arrival values are then sent from the target node TG to at least one cooperating node ND, for example the selected cooperating node or each cooperating node ND.

For example, the target node TG transmits a signal which is received by the synchronous cooperating nodes ND which compute the time difference of arrival with respect to a common clock, for example provided by one of the cooperating nodes to the others. After providing all measurements or distances $d_{ri}$ to one cooperating node ND, the estimate of the distance $d_{Ri}$ is known up to a constant $\beta$, and at least one node has the knowledge of the biased distance $m_i$

$$m_i = d_{Ri} + \beta$$

For example, each cooperating node ND measures the reception time of messages broadcasted by the target node. Under the assumption that the cooperating nodes clocks are synchronized, the measurement at node NDi can be expressed as

$$m_i = d_{Ri} + \beta$$

where $\beta$ is a bias common to all the cooperating nodes and is a constant which takes into account that the target node TG is not synchronized with the cooperating nodes ND.

The linear solution for estimating a first estimate $\hat{X}_{Sl}$ of the target node TG position can be proceeded by a Spherical Interpolation SI as follows:

$$\hat{X}_{SI} = \mathbf{P}(\mathbf{A}^T\mathbf{A})^{-1}\mathbf{A}^T\mathbf{b} + X_0$$

$$\mathbf{A} = -2 \begin{bmatrix} x_2 - x_1 & y_2 - y_1 & m_1 - m_2 \\ \vdots & \vdots & \vdots \\ x_N - x_1 & y_N - y_1 & m_1 - m_N \end{bmatrix} \quad ; \quad \mathbf{b} = \begin{bmatrix} m_2^2 - m_1^2 - d_{20}^2 + d_{10}^2 \\ \vdots \\ m_N^2 - m_1^2 - d_{N0}^2 + d_{10}^2 \end{bmatrix} ;$$

$$\mathbf{P} = \begin{bmatrix} 1 & 0 & 0 \\ 0 & 1 & 0 \end{bmatrix}$$

At next step S54, the processor 200 determines an estimate of the direction of the target node TG relative to the common reference position.

For example, the estimate of the direction of the target node TG relative to the common reference position corresponds to the argument of the vector $\alpha = X_R - X_0$. It can be computed using a first estimate of the target position obtained from spherical interpolation (SI) algorithm as disclosed in the paper of J. O. Smith; J. S. Abel entitled "Closed-form least-squares source location estimation from range-difference measurements," and published in IEEE Trans. Acoust., Speech, Signal Processing, Dec. 1987."

At next step S55, the processor 200 determines an estimate $\hat{X}_R$ of the position of the target node TG.

For example, the processor 200 solves the following optimization problem by means of a numerical algorithm e.g., Gauss-Newton.

$$\left[\hat{\beta}, \hat{R}\right] = \arg\min_{\beta, R} \sum_i (m_i^2 - d_{i0}^2 - 2m_i\beta + \beta^2 - R^2 + 2(x_i - x_0)\cos(\alpha)R + 2(y_i - y_0)\sin(\alpha)R)^2$$

Then, the new estimate $\hat{X}_R$ of the position of the target node TG is obtained according to

$$\hat{X}_R = \begin{bmatrix} \hat{R}\cos\alpha + x_0 \\ \hat{R}\sin\alpha + y_0 \end{bmatrix}$$

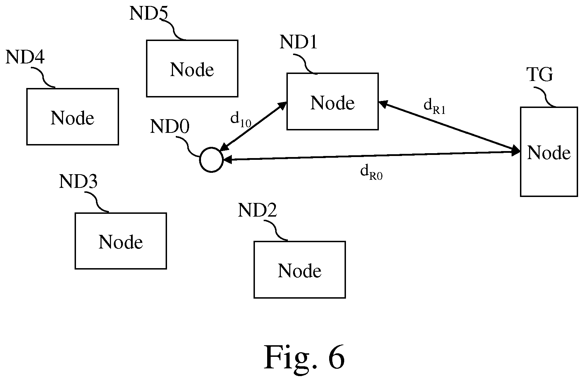

**Fig. 6** discloses the different distances which are determined in order to determine the geo localization of a node according to the present invention.

In Fig. 6, the distance $d_{10}$ between the node ND1 and the common reference point ND0 is represented. The distance between the target node TG and the common reference point ND0 is noted $d_{R0}$, and distance between the node ND1 and the target node TG noted $d_{R1}$.

Naturally, many modifications can be made to the embodiments of the invention described above without departing from the scope of the present invention.

**Claims**

1.  Method for determining, by at least a cooperating node of a group of cooperating nodes, a position of a target node, **characterized in that** the method comprises the steps, executed by the cooperating node of:

    - determining (S30, S40, S50) the position of other cooperating nodes from distances derived from time of arrivals of signals, or from distances derived from round trip delays or from geolocalization information transferred by the cooperating nodes,
    - determining (S31, S41, S51) the position of a common reference position for the cooperating nodes, the common reference position being the barycenter of the positions of the cooperating nodes,
    - obtaining information related to measurements on wireless signals exchanged between the target node and the cooperating nodes, the measurements on wireless signals exchanged between the target node and the cooperating nodes are time of arrivals of signals, round trip delays or received signals strength.

- determining, from the obtained information, an information representative of the distance between the target node and said common reference position or representative of the direction of the target node relative to the common reference,

- determining, (S35, S45, S55) from information related to measurements and from the information representative of the distance between the target node and said common reference position or representative of the direction of the target node relative to the common reference, the position of the target node.

2. Method according to claim 1, **characterized in that** the common reference position is determined using an iterative algorithm, between the cooperating nodes which receive respectively information related to the common reference position from the other cooperating nodes, perform linear operations on the received information related to the common reference position and then transmit the obtained results of linear operations to the other cooperating nodes.

3. Method according to any of the claims 1 to 2, **characterized in that** the distance between the common reference position and the target node is the average value of all distances between the cooperating nodes and the target node or the average of the lower and upper bounds of all distances between the cooperating nodes and the target node or the upper bound of all distances between the cooperating nodes and the target node.

4. Method according to any of the claims 1 to 3, **characterized in that** the position of the target node $\hat{X}_R$ is determined using the determined distance $d_{R0}$ between the common reference position and the target node, and using the following formula :

$$\hat{X}_R = (\mathbf{A}^T \mathbf{A} + \lambda \mathbf{I}_2)^{-1} \mathbf{A}^T \mathbf{b} + X_0$$

where $\mathbf{I}_2$ is the 2x2 identity matrix, $X_0$ is the position of the common reference position, and

$$\mathbf{A} = -2 \begin{bmatrix} x_1 - x_0 & y_1 - x_0 \\ \vdots & \vdots \\ x_N - x_0 & y_N - x_0 \end{bmatrix} \quad ; \quad \mathbf{b} = \begin{bmatrix} d_{R1}^2 - d_{R0}^2 - d_{10}^2 \\ \vdots \\ d_{RN}^2 - d_{R0}^2 - d_{N0}^2 \end{bmatrix}$$

$\lambda$ is the root of a polynomial of degree 4, $x_i\, y_i$ with i=1 to $N$ is the coordinates of the i-th cooperating node, $d_{Ri}$ is the distance between the $i$-th cooperating node, $d_{R0}$ is the distance between the common reference position and the target node, $d_{i0}$ is the distance between the $i$-th cooperating node, and the common reference position, the polynomial being expressed as

$$v_1^2 (d_2 + \lambda)^2 + v_2^2 (d_1 + \lambda)^2 - d_{R0}^2 (d_1 + \lambda)^2 (d_2 + \lambda)^2 = 0$$

where $\mathbf{A}^T \mathbf{A} = \mathbf{U} \begin{bmatrix} d_1 & 0 \\ 0 & d_2 \end{bmatrix} \mathbf{U}^T$ is a singular value decomposition of $\mathbf{A}^T \mathbf{A}$, and $\begin{bmatrix} v_1 \\ v_2 \end{bmatrix} = \mathbf{U}^T \mathbf{A}^T \mathbf{b}$ .

5. Method according to any of the claims 1 to 3, **characterized in that** the position of the target node is determined by determining a first estimate $\hat{X}_{LS}$ of the position of the target node :

$$\hat{X}_{LS} = \mathbf{P}(\mathbf{A}^T \mathbf{A})^{-1} \mathbf{A}^T \mathbf{b}$$

$$A = \begin{bmatrix} -2x_1 & -2y_1 & 1 \\ \vdots & \vdots & \vdots \\ -2x_N & -2y_N & 1 \end{bmatrix}$$

where

$$b = \begin{bmatrix} d_{R1}^2 - (x_1^2 + y_1^2) \\ \vdots \\ d_{RN}^2 - (x_N^2 + y_N^2) \end{bmatrix}$$

$$P = \begin{bmatrix} 1 & 0 & 0 \\ 0 & 1 & 0 \end{bmatrix}$$

and by refining the position of the target note according to:

$$\hat{X}_R = \frac{d_{R0}}{\left\| \hat{X}_{LS} - X_0 \right\|} (\hat{X}_{LS} - X_0) + X_0$$

where $X_0$ is the position of the common reference position, $d_{R0}$ is the distance between the common reference position and the target node.

**6.** Method according to any of the claims 1 to 3, **characterized in that** the cooperating nodes are synchronized and each cooperating node measures the reception time of messages broadcasted by the target node in order to determine a distance $m_i$ with the target node $m_i = d_{Ri} + \beta$ where $\beta$ is a bias common to the cooperating nodes i is the indicia of the cooperating node, and the position of the target node is determined by :

- determining a first estimate $\hat{X}_{SI}$ of the position of the target node,

$$\hat{X}_{SI} = P(A^T A)^{-1} A^T b + X_0$$

$$A = -2 \begin{bmatrix} x_2 - x_1 & y_2 - y_1 & m_1 - m_2 \\ \vdots & \vdots & \vdots \\ x_N - x_1 & y_N - y_1 & m_1 - m_N \end{bmatrix} ; \qquad b = \begin{bmatrix} m_2^2 - m_1^2 - d_{20}^2 + d_{10}^2 \\ \vdots \\ m_N^2 - m_1^2 - d_{N0}^2 + d_{10}^2 \end{bmatrix} ;$$

$$P = \begin{bmatrix} 1 & 0 & 0 \\ 0 & 1 & 0 \end{bmatrix}$$

the direction of the target node relative to the common reference corresponding to the argument of a vector $\alpha$ = $X_R - X_0$, $X_0$ is the position of the common reference position and $\hat{X}_R$ of the position of the target node
- optimizing

$$\left[ \hat{\beta}, \hat{R} \right] = \arg\min_{\beta, R} \sum_i (m_i^2 - d_{i0}^2 - 2m_i\beta + \beta^2 - R^2 + 2(x_i - x_0)\cos(\alpha)R + 2(y_i - y_0)\sin(\alpha)R)^2$$

- determining the position $\hat{X}_R$ of the target node according to

$$\hat{X}_R = \begin{bmatrix} \hat{R}\cos\alpha + x_0 \\ \hat{R}\sin\alpha + y_0 \end{bmatrix}.$$

**7.** Method according to any of the claims 1 to 3, **characterized in that** plural cooperating nodes execute the steps of the method.

**8.** Device for determining, by a at least a cooperating node of a group of cooperating nodes, a position of a target node, **characterized in that** the device comprises:

- means for determining the position of other cooperating nodes from distances derived from time of arrivals of signals, or from distances derived from round trip delays or from geolocalization information transferred by the cooperating nodes,
- means for determining the position of a common reference position for the cooperating nodes, the common reference position being the barycenter of the positions of the cooperating nodes,
- means for obtaining information related to measurements on wireless signals exchanged between the target node and the cooperating nodes, the measurements on wireless signals exchanged between the target node and the cooperating nodes are time of arrivals of signals, round trip delays or received signals strength.
- means for determining, from the obtained information, an information representative of the distance between the target node and said common reference position or representative of the direction of the target node relative to the common reference,
- means for determining, from information related to measurements and from the information representative of the distance between the target node and said common reference position or representative of the direction of the target node relative to the common reference, the position of the target node.

**9.** Computer program which can be directly loadable into a programmable device, comprising instructions or portions of code for implementing the steps of the method according to claims 1 to 7, when said computer program is executed on a programmable device.

**Patentansprüche**

**1.** Verfahren zum Bestimmen, durch wenigstens einen kooperierenden Knoten einer Gruppe von kooperierenden Knoten, einer Position eines Zielknotens, **dadurch gekennzeichnet, dass** das Verfahren die durch den kooperierenden Knoten ausgeführten folgenden Schritte umfasst:

- Bestimmen (S30, S40, S50) der Position von anderen kooperierenden Knoten aus Abständen, abgeleitet aus einer Ankunftszeit von Signalen, oder aus Abständen, abgeleitet aus Umlaufverzögerungen, oder aus Geolokalisierungsinformation, transferiert durch die kooperierenden Knoten,
- Bestimmen (S31, S41, S51) der Position einer gemeinsamen Referenzposition für die kooperierenden Knoten, wobei die gemeinsame Referenzposition das Baryzentrum der Positionen der kooperierenden Knoten ist,
- Erhalten von Information, die auf Messungen an zwischen dem Zielknoten und den kooperierenden Knoten ausgetauschten drahtlosen Signalen bezogen ist, wobei die Messungen an zwischen dem Zielknoten und den kooperierenden Knoten ausgetauschten drahtlosen Signalen eine Ankunftszeit von Signalen, Umlaufverzögerungen oder eine Stärke empfangener Signale sind,
- Bestimmen, aus der erhaltenen Information, einer Information, die den Abstand zwischen dem Zielknoten und der gemeinsamen Referenzposition darstellt oder die Richtung des Zielknotens relativ zur gemeinsamen Referenz darstellt,
- Bestimmen (S35, S45, S55), aus Information, die auf Messungen bezogen ist, und aus der Information, die den Abstand zwischen dem Zielknoten und der gemeinsamen Referenzposition darstellt oder die Richtung des Zielknotens relativ zur gemeinsamen Referenz darstellt, der Position des Zielknotens.

**2.** Verfahren nach Anspruch 1, **dadurch gekennzeichnet, dass** die gemeinsame Referenzposition bestimmt wird unter Verwendung eines iterativen Algorithmus zwischen den kooperierenden Knoten, die jeweils Information, die bezogen ist auf die gemeinsame Referenzposition, von den anderen kooperierenden Knoten empfangen, lineare Operationen an der empfangenen Information, die bezogen ist auf die gemeinsame Referenzposition, durchführen und dann die erhaltenen Ergebnisse von linearen Operationen zu den anderen kooperierenden Knoten senden.

**3.** Verfahren nach einem der Ansprüche 1 bis 2, **dadurch gekennzeichnet, dass** der Abstand zwischen der gemeinsamen Referenzposition und dem Zielknoten der Durchschnittswert von allen Abständen zwischen den kooperierenden Knoten und dem Zielknoten oder der Durchschnitt der unteren und oberen Grenzen von allen Abständen zwischen den kooperierenden Knoten und dem Zielknoten oder die obere Grenze von allen Abständen zwischen den kooperierenden Knoten und dem Zielknoten ist.

4. Verfahren nach einem der Ansprüche 1 bis 3, **dadurch gekennzeichnet, dass** die Position des Zielknotens $\hat{X}_R$ bestimmt wird unter Verwendung des bestimmten Abstands $d_{R0}$ zwischen der gemeinsamen Referenzposition und dem Zielknoten und unter Verwendung der folgenden Formel:

$$\hat{X}_R = (A^T A + \lambda I_2)^{-1} A^T b + X_0$$

wobei $I_2$ die *2x2*-Identitätsmatrix ist, $X_0$ die Position der gemeinsamen Referenzposition ist und folgendes gilt:

$$A = -2 \begin{bmatrix} x_1 - x_0 & y_1 - y_0 \\ \vdots & \vdots \\ x_N - x_0 & y_N - y_0 \end{bmatrix}; \quad b = \begin{bmatrix} d_{R1}^2 - d_{R0}^2 - d_{10}^2 \\ \vdots \\ d_{RN}^2 - d_{R0}^2 - d_{N0}^2 \end{bmatrix},$$

$\lambda$ die Wurzel eines Polynoms des Grads 4 ist, $x_i y_i$ mit $i$=1 bis $N$ die Koordinaten des $i$-ten kooperierenden Knotens sind, $d_{Ri}$ der Abstand zwischen dem $i$-ten kooperierenden Knoten ist, $d_{R0}$ der Abstand zwischen der gemeinsamen Referenzposition und dem Zielknoten ist, $d_{i0}$ der Abstand zwischen dem $i$-ten kooperierenden Knoten und der gemeinsamen Referenzposition ist, wobei der Polynomausdruck ausgedrückt wird als

$$v_1^2(d_2 + \lambda)^2 + v_2^2(d_1 + \lambda)^2 - d_{R0}^2(d_1 + \lambda)^2(d_2 + \lambda)^2 = 0$$

wobei $A^T A = U \begin{bmatrix} d_1 & 0 \\ 0 & d_2 \end{bmatrix} U^T$ eine singuläre Wertzerlegung von $A^T A$ ist und $\begin{bmatrix} v_1 \\ v_2 \end{bmatrix} = U^T A^T b$ gilt.

5. Verfahren nach einem der Ansprüche 1 bis 3, **dadurch gekennzeichnet, dass** die Position des Zielknotens bestimmt wird durch Bestimmen einer ersten Schätzung $\hat{X}_{IS}$ der Position des Zielknotens:

$$\hat{X}_{IS} = P(A^T A)^{-1} A^T b$$

$$A = \begin{bmatrix} -2x_1 & -2y_1 & 1 \\ \vdots & \vdots & \vdots \\ -2x_N & -2y_N & 1 \end{bmatrix}$$

wobei

$$b = \begin{bmatrix} d_{R1}^2 - (x_1^2 + y_1^2) \\ \vdots \\ d_{RN}^2 - (x_N^2 + y_N^2) \end{bmatrix}$$

$$P = \begin{bmatrix} 1 & 0 & 0 \\ 0 & 1 & 0 \end{bmatrix}$$

und durch Verfeinern der Position des Zielknotens gemäß:

$$\hat{X}_R = \frac{d_{R0}}{\|\hat{X}_{IS} - X_0\|}(\hat{X}_{IS} - X_0) + X_0$$

wobei $X_0$ die Position der gemeinsamen Referenzposition ist und $d_{R0}$ der Abstand zwischen der gemeinsamen Referenzposition und dem Zielknoten ist.

6. Verfahren nach einem der Ansprüche 1 bis 3, **dadurch gekennzeichnet, dass** die kooperierenden Knoten synchronisiert werden und jeder kooperierende Knoten die Empfangszeit von durch den Zielknoten rundgesendeten Nachrichten misst, um einen Abstand $m_i$ mit dem Zielknoten $m_i = d_{Ri} + \beta$ zu bestimmen, wobei $\beta$ ein systematischer Fehler ist, der den kooperierenden Knoten gemeinsam ist, $i$ die Markierung der kooperierenden Knoten ist und die Position des Zielknotens bestimmt wird durch:

 - Bestimmen einer ersten Schätzung $\hat{X}_{SI}$ der Position des Zielknotens,

$$\hat{X}_{SI} = \boldsymbol{P}(\boldsymbol{A}^T\boldsymbol{A})^{-1}\boldsymbol{A}^T\boldsymbol{b} + X_0$$

$$\boldsymbol{A} = -2\begin{bmatrix} x_2 - x_1 & y_2 - y_1 & m_2 - m_1 \\ \vdots & \vdots & \vdots \\ x_N - x_1 & y_N - y_1 & m_1 - m_N \end{bmatrix}; \quad \boldsymbol{b} =$$

$$\begin{bmatrix} m_2^2 - m_1^2 - d_{20}^2 + d_{10}^2 \\ \vdots \\ m_N^2 - m_1^2 - d_{N0}^2 + d_{10}^2 \end{bmatrix};$$

$$\boldsymbol{P} = \begin{bmatrix} 1 & 0 & 0 \\ 0 & 1 & 0 \end{bmatrix}$$

 wobei die Richtung des Zielknotens relativ zur gemeinsamen Referenz dem Argument eines Vektors $\alpha = X_R - X_0$ entspricht, wobei $X_0$ die Position der gemeinsamen Referenzposition ist und $\hat{X}_R$ die Position des Zielknotens ist,
 - Optimieren von

$$[\hat{\beta}, \hat{R}] = arg \min_{\beta,R} \sum_i (m_i^2 - d_{i0}^2 - 2m_i\beta + \beta^2 - R^2 + 2(x_i - x_0)\cos(\alpha)R +$$

$$2(y_i - y_0)\sin(\alpha)R)^2$$

 - Bestimmen der Position $\hat{X}_R$ des Zielknotens gemäß

$$\hat{X}_R = \begin{bmatrix} \hat{R}\cos\alpha + x_0 \\ \hat{R}\sin\alpha + y_0 \end{bmatrix}$$

7. Verfahren nach einem der Ansprüche 1 bis 3, **dadurch gekennzeichnet, dass** mehrere kooperierende Knoten die Schritte des Verfahrens ausführen.

8. Vorrichtung zum Bestimmen, durch wenigstens einen kooperierenden Knoten einer Gruppe von kooperierenden Knoten, einer Position eines Zielknotens, **dadurch gekennzeichnet, dass** die Vorrichtung folgendes umfasst:

 - Mittel zum Bestimmen der Position von anderen kooperierenden Knoten aus Abständen, abgeleitet aus einer Ankunftszeit von Signalen, oder aus Abständen, abgeleitet aus Umlaufverzögerungen, oder aus Geolokalisierungsinformation, transferiert durch die kooperierenden Knoten,
 - Mittel zum Bestimmen der Position einer gemeinsamen Referenzposition für die kooperierenden Knoten, wobei die gemeinsame Referenzposition das Baryzentrum der Positionen der kooperierenden Knoten ist,
 - Mittel zum Erhalten von Information, die auf Messungen an zwischen dem Zielknoten und den kooperierenden Knoten ausgetauschten drahtlosen Signalen bezogen ist, wobei die Messungen an zwischen dem Zielknoten und den kooperierenden Knoten ausgetauschten drahtlosen Signalen eine Ankunftszeit von Signalen, Umlaufverzögerungen oder eine Stärke empfangener Signale sind,

- Mittel zum Bestimmen, aus der erhaltenen Information, einer Information, die den Abstand zwischen dem Zielknoten und der gemeinsamen Referenzposition darstellt oder die Richtung des Zielknotens relativ zur gemeinsamen Referenz darstellt,
- Mittel zum Bestimmen, aus Information, die auf Messungen bezogen ist, und aus der Information, die den Abstand zwischen dem Zielknoten und der gemeinsamen Referenzposition darstellt oder die Richtung des Zielknotens relativ zur gemeinsamen Referenz darstellt, der Position des Zielknotens.

**9.** Computerprogramm, das direkt ladbar in eine programmierbare Vorrichtung sein kann, umfassend Anweisungen oder Teilbereiche eines Codes zum Implementieren der Schritte des Verfahrens nach den Ansprüchen 1 bis 7, wenn das Computerprogramm auf einer programmierbaren Vorrichtung ausgeführt wird.

**Revendications**

**1.** Procédé pour déterminer, par au moins un noeud coopérant d'un groupe de noeuds coopérants, une position d'un noeud cible, **caractérisé en ce que** le procédé comporte les étapes, exécutées par le noeud coopérant de:

- détermination (S30, S40, S50) de la position d'autres noeuds coopérants à partir de distances calculées à partir du temps d'arrivée de signaux, ou à partir de distances dérivées de retards aller-retour ou d'informations de géolocalisation transférées par les noeuds coopérants,
- détermination (S31, S41, S51) de la position d'une position de référence commune pour les noeuds coopérants, la position de référence commune étant le barycentre des positions des noeuds coopérants,
- obtention d'informations relatives aux mesures sur les signaux sans fil échangés entre le noeud cible et les noeuds coopérants, les mesures sur les signaux sans fil échangés entre le noeud cible et les noeuds coopérants sont des instants d'arrivée de signaux, de délais aller-retour ou d'intensité des signaux reçus.
- détermination, à partir des informations obtenues, d'une information représentative de la distance entre le noeud cible et ladite position de référence commune ou représentative de la direction du noeud cible par rapport à la référence commune,
- détermination, (S35, S45, S55) à partir d'informations relatives aux mesures et d'informations représentatives de la distance entre le noeud cible et ladite position de référence commune ou représentatives de la direction du noeud cible par rapport à la référence commune, de la position du noeud cible.

**2.** Procédé selon la revendication 1, **caractérisé en ce que** la position de référence commune est déterminée à l'aide d'un algorithme itératif, entre les noeuds coopérants qui reçoivent respectivement des informations relatives à la position de référence commune des autres noeuds coopérants, effectuant des opérations linéaires sur les informations reçues relatives à la position de référence commune, puis transmettre les résultats obtenus des opérations linéaires aux autres noeuds coopérants.

**3.** Procédé selon l'une quelconque des revendications 1 à 2, **caractérisé en ce que** la distance entre la position de référence commune et le noeud cible est la valeur moyenne de toutes les distances entre les noeuds coopérants et le noeud cible ou la moyenne des limites inférieures et supérieures, de toutes les distances entre les noeuds coopérants et le noeud cible ou la limite supérieure de toutes les distances entre les noeuds coopérant et le noeud cible.

**4.** Procédé selon l'une quelconque des revendications 1 à 3, **caractérisé en ce que** la position du noeud cible $\hat{X}_R$ est déterminée en utilisant la distance déterminée $d_{R0}$ entre la position de référence commune et le noeud cible, et à l'aide de la formule suivante:

$$\hat{X}_R = (\mathbf{A}^T\mathbf{A} + \lambda\mathbf{I}_2)^{-1}\mathbf{A}^T\mathbf{b} + X_0$$

où $\mathbf{I}_2$ est la matrice identité, $X_0$ est la position de la position de référence commune, et

$$\mathbf{A} = -2\begin{bmatrix} x_1 - x_0 & y_1 - y_0 \\ \vdots & \vdots \\ x_N - x_0 & y_N - y_0 \end{bmatrix} \quad ; \quad \mathbf{b} = \begin{bmatrix} d_{R1}^2 - d_{R0}^2 - d_{10}^2 \\ \vdots \\ d_{RN}^2 - d_{R0}^2 - d_{N0}^2 \end{bmatrix}$$

$\lambda$ est la racine d'un polynôme de degré 4, $x_i$ $y_i$

avec i=1 à *N* sont les coordonnées du *i*-ième noeud coopérant, $d_{Ri}$ est la distance entre le *i*-ième noeud coopérant, $d_{R0}$ est la distance entre la position de référence commune et le noeud cible, $d_{i0}$ est la distance entre le i-ième noeud coopérant et la position de référence commune, le polynôme étant exprimé comme :

$$v_1^2(d_2 + \lambda)^2 + v_2^2(d_1 + \lambda)^2 - d_{R0}^2(d_1 + \lambda)^2(d_2 + \lambda)^2 = 0$$

$$\mathbf{A}^T\mathbf{A} = \mathbf{U}\begin{bmatrix} d_1 & 0 \\ 0 & d_2 \end{bmatrix}\mathbf{U}^T$$
où         est une décomposition en valeur singulière de $\mathbf{A}^T\mathbf{A}$, et $\begin{bmatrix} v_1 \\ v_2 \end{bmatrix} = \mathbf{U}^T\mathbf{A}^T\mathbf{b}$ .

5. Procédé selon l'une quelconque des revendications 1 à 3, **caractérisé en ce que** la position du noeud cible est déterminée en déterminant une première estimation $\hat{X}_{LS}$ de la position du noeud cible:

$$\hat{X}_{LS} = \mathbf{P}(\mathbf{A}^T\mathbf{A})^{-1}\mathbf{A}^T\mathbf{b}$$

$$A = \begin{bmatrix} -2x_1 & -2y_1 & 1 \\ \vdots & \vdots & \vdots \\ -2x_N & -2y_N & 1 \end{bmatrix}$$

où

$$b = \begin{bmatrix} d_{R1}^2 - (x_1^2 + y_1^2) \\ \vdots \\ d_{RN}^2 - (x_N^2 + y_N^2) \end{bmatrix}$$

$$P = \begin{bmatrix} 1 & 0 & 0 \\ 0 & 1 & 0 \end{bmatrix}$$

et en affinant la position du noeud cible selon :

$$\hat{X}_R = \frac{d_{R0}}{\left\| \hat{X}_{LS} - X_0 \right\|}(\hat{X}_{LS} - X_0) + X_0$$

où $X_0$ est la position de la position de référence commune, , $d_{R0}$ est la distance entre la position de référence commune et le noeud cible.

6. Procédé selon l'une quelconque des revendications 1 à 3, **caractérisé en ce que** les noeuds coopérants sont synchronisés et chaque noeud coopérant mesure le temps de réception des messages diffusés par le noeud cible afin de déterminer une distance $m_i$ avec le noeud cible $m_i = d_{Ri} + \beta$ où $\beta$ est un biais commun aux noeuds coopérants i est l'indice du noeud coopérant, et la position du noeud cible est déterminée par:

- déterminer une première estimation de la position du noeud cible,

$$\hat{X}_{SI} = \mathbf{P}(\mathbf{A}^T\mathbf{A})^{-1}\mathbf{A}^T\mathbf{b} + X_0$$

$$A = -2 \begin{bmatrix} x_2 - x_1 & y_2 - y_1 & m_1 - m_2 \\ \vdots & \vdots & \vdots \\ x_N - x_1 & y_N - y_1 & m_1 - m_N \end{bmatrix} \quad ; \quad b = \begin{bmatrix} m_2^2 - m_1^2 - d_{20}^2 + d_{10}^2 \\ \vdots \\ m_N^2 - m_1^2 - d_{N0}^2 + d_{10}^2 \end{bmatrix} ;$$

$$P = \begin{bmatrix} 1 & 0 & 0 \\ 0 & 1 & 0 \end{bmatrix}$$

la direction du noeud cible par rapport à la référence commune correspondant à l'argument d'un vecteur $\alpha = X_R - X_0$, $X_0$ est la position de la position de référence commune et $\hat{X}_R$ de la position du noeud cible
- optimiser

$$\left[ \hat{\beta}, \hat{R} \right] = \arg \min_{\beta, R} \sum_i (m_i^2 - d_{i0}^2 - 2m_i\beta + \beta^2 - R^2 + 2(x_i - x_0)\cos(\alpha)R + 2(y_i - y_0)\sin(\alpha)R)^2$$

- déterminer la position du noeud cible $\hat{X}_R$ en fonction de

$$\hat{X}_R = \begin{bmatrix} \hat{R}\cos\alpha + x_0 \\ \hat{R}\sin\alpha + y_0 \end{bmatrix} .$$

7. Procédé selon l'une quelconque des revendications 1 à 3, **caractérisé en ce que** plusieurs noeuds coopérants exécutent les étapes du procédé.

8. Dispositif pour déterminer, par au moins un noeud coopérant d'un groupe de noeuds coopérants, une position d'un noeud cible, **caractérisé en ce que** le dispositif comporte:

   - des moyens pour déterminer la position d'autres noeuds coopérants à partir de distances calculées à partir du temps d'arrivée de signaux, ou à partir de temps d'attente aller-retour ou d'informations de géolocalisation transférées par les noeuds coopérants,
   - des moyens pour déterminer la position d'une position de référence commune pour les noeuds coopérants, la position de référence commune étant le barycentre des positions des noeuds coopérants,
   - des moyens pour obtenir des informations liées aux mesures de signaux sans fil échangés entre le noeud cible et les noeuds coopérants, les mesures de signaux sans fil échangés entre le noeud cible et les noeuds coopérants sont des heures d'arrivée de signaux, de délais d'aller-retour ou d'intensité de signaux reçus.
   - des moyens pour déterminer, à partir des informations obtenues, une information représentative de la distance entre le noeud cible et ladite position de référence commune ou représentative de la direction du noeud cible par rapport à la position de référence commune,
   - des moyens pour déterminer, à partir d'informations relatives aux mesures et d'informations représentatives de la distance entre le noeud cible et ladite position de référence commune ou représentatives de la direction du noeud cible par rapport à la référence commune, la position du noeud cible.

9. Programme d'ordinateur pouvant être chargé directement dans un dispositif programmable, comprenant des instructions ou des portions de code pour la mise en oeuvre des étapes du procédé selon les revendications 1 à 7, lorsque ledit programme informatique est exécuté sur un dispositif programmable.

EP 2 785 124 B1

ND5

ND4

Node

ND1

Node

Node

TG

Node

ND3

Node

ND2

Node

Fig. 1

Nd

200 — Processor

Ant

203 — RAM

Wireless I/F ⌐205

201

202 — ROM

Fig. 2

22

S30 — Determine relative position cooperating nodes

S31 — Determine common reference position

S32 — Obtain distances $d_{i0}$

S33 — Obtain distances $d_{Ri}$

S34 — Determine distance $d_{R0}$

S35 — Compute relative position target node

Fig. 3

S40 — Determine relative position cooperating nodes

S41 — Determine common reference position

S42 — obtain distances $d_{i0}$

S43 — Obtain distances $d_{Ri}$

S44 — Determine distance $d_{R0}$

S45 — Compute first estimate of position target node

S46 — Compute position target node

Fig. 4

S50 — Determine relative position cooperating nodes

S51 — Determine common reference position

S52 — Determine distances $d_{i0}$

S53 — Obtain difference of distances

S54 — Determine direction target node relative to common reference

S55 — Compute position target node

Fig. 5

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8259699 B

- FR 2965060

**Non-patent literature cited in the description**

- **R. MURRAY.** Consensus problems in networks of agents with switching topology and time-delays. *Automatic Control, IEEE Transactions on,* September 2004, vol. 49 (9), 1520-1533

- **J. O. SMITH ; J. S. ABEL.** Closed-form least-squares source location estimation from range-difference measurements. *IEEE Trans. Acoust., Speech, Signal Processing,* December 1987